(19) **Europäisches Patentamt**
**European Patent Office**
**Office européen des brevets**

(11) **EP 2 231 457 B1**

(12) **FASCICULE DE BREVET EUROPEEN**

(45) Date de publication et mention
de la délivrance du brevet:
**12.06.2013 Bulletin 2013/24**

(21) Numéro de dépôt: **09703508.3**

(22) Date de dépôt: **09.01.2009**

(51) Int Cl.:
***B60W 30/18*** *(2012.01)* ***B60W 50/06*** *(2006.01)*

(86) Numéro de dépôt international:
**PCT/FR2009/050024**

(87) Numéro de publication internationale:
**WO 2009/092942 (30.07.2009 Gazette 2009/31)**

(54) **DISPOSITIF ET PROCEDE DE PILOTAGE D'UNE TRANSMISSION AUTOMATISEE D'UN GROUPE MOTOPROPULSEUR D'UN VEHICULE AUTOMOBILE**

VORRICHTUNG UND VERFAHREN ZUR STEUERUNG EINES AUTOMATIKGETRIEBES FÜR DEN ANTRIEBSZUG EINES AUTOMOBILS

DEVICE AND METHOD FOR CONTROLLING THE AUTOMATED TRANSMISSION OF THE POWER TRAIN OF AN AUTOMOBILE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **16.01.2008 FR 0800216**

(43) Date de publication de la demande:
**29.09.2010 Bulletin 2010/39**

(73) Titulaire: **Renault s.a.s.**
**92100 Boulogne-Billancourt (FR)**

(72) Inventeurs:
• **FAUVEL, François**
**F-91470 Boullay-les-Troux (FR)**

• **LEHEUP, Thierry**
**F-91510 Lardy (FR)**
• **VESPASIEN, Jean-Marie**
**F-94600 Choisy-le-Roi (FR)**

(74) Mandataire: **Rougemont, Bernard et al**
**Renault s.a.s**
**Technocentre**
**Sce 00267 TCR GRA 2 36**
**1, Avenue du Golf**
**78288 Guyancourt (FR)**

(56) Documents cités:
**WO-A-2007/030045      FR-A- 2 851 629**
**FR-A- 2 875 284        US-A1- 2006 089 234**

**Description**

DOMAINE TECHNIQUE AUQUEL SE RAPPORTE L'INVENTION

La présente invention concerne de manière générale le pilotage des moyens de transmission vers les roues d'un véhicule automobile d'un couple issu d'un groupe motopropulseur.

Elle concerne plus particulièrement un procédé de pilotage d'une transmission automatisée d'un groupe motopropulseur d'un véhicule automobile, tel Que défini dans la partie préambule de la revendication 1.

L'invention trouve une application particulièrement avantageuse dans le pilotage des boîtes de vitesses robotisées, automatiques ou à transmission de couple continue, ainsi que dans le pilotage des moyens de transmission des véhicules automobiles électriques ou hybrides.

ARRIERE-PLAN TECHNOLOGIQUE

Une transmission automatisée est classiquement commandée par des moyens électroniques de pilotage pourvus d'un bloc d'acquisition de données et d'un calculateur.

Le bloc d'acquisition de données est adapté à relever une ou plusieurs variables d'entrée relatives à la configuration du véhicule automobile, à son environnement, ainsi qu'à la volonté du conducteur du véhicule.

Le calculateur est quant à lui adapté à générer une consigne de pilotage du couple à appliquer aux roues du véhicule automobile, en fonction des variables relevées par le bloc d'acquisition.

On connaît par exemple du document WO 2007/030045 un procédé de pilotage d'un moteur de camion dans lequel, lorsque le véhicule se déplace à vitesse constante, sur le ralenti moteur, et qu'il reçoit une requête du conducteur pour accélérer, il détermine automatiquement si le moteur est adapté à développer le couple désiré sans changer de rapport de vitesses.

On connaît également du document US 2006/089234 un procédé de pilotage d'un moteur d'un véhicule automobile équipé d'une boîte de vitesses automatique sur laquelle il est possible de sélectionner différents modes (par exemple sport, normal, ...). Dans ce document, la consigne d'accélération du véhicule est calculée en intégrant un taux d'accélération cible déterminé en fonction du mode sélectionné.

On connaît aussi du document FR 2 851 629 un procédé de pilotage d'un embrayage de véhicule automobile au cours duquel l'embrayage est piloté pour s'ouvrir progressivement de manière à mettre le véhicule automobile en roue libre afin d'éviter que le frein moteur ne ralentisse inutilement le véhicule. Dans ce document, il est prévu, lorsque le véhicule prend alors trop de vitesse, de refermer l'embrayage pour ralentir à nouveau le véhicule à l'aide du frein moteur, en asservissant au préalable la vitesse de rotation du moteur à celle de l'essieu.

On connaît en particulier du document FR 2 875 284 des moyens électroniques de pilotage adaptés à calculer quatre consignes de pilotage correspondant à quatre modes d'avancement du véhicule automobile, puis à choisir la consigne la mieux adaptée à la configuration du véhicule automobile.

Parmi ces quatre modes, on distingue un mode dit de « rampage » dans lequel la consigne de pilotage est déduite de la position de la pédale de frein. Ce mode est sélectionné lorsque le conducteur n'appuie pas sur la pédale d'accélérateur et que le véhicule se déplace à une vitesse réduite. Ce mode permet ainsi au conducteur d'accélérer ou de freiner à l'aide de la seule pédale de frein, ce qui facilite le pilotage du véhicule dans les embouteillages ou pour réaliser un créneau.

On distingue également un mode dit de « contrôle continu » dans lequel la consigne de pilotage est déduite de la position de la pédale d'accélérateur, la position de la pédale de frein n'étant plus prise en compte.

On distingue enfin un mode dit « neutre » dans correspondant au cas où le levier de commande de la transmission du véhicule est en position « Neutre » ou « Parking ».

Le mode de rampage est alors sélectionné lorsque la vitesse du véhicule reste inférieure à un seuil prédéterminé, tandis que le mode de contrôle continu est sélectionné lorsque la vitesse du véhicule dépasse ce seuil prédéterminé.

Toutefois, l'utilisation d'un seuil de vitesse pour sélectionner le mode de calcul de la consigne de pilotage ne permet pas de générer une consigne de pilotage continue lors du passage du mode de rampage au mode de contrôle continu. Cela se traduit alors, lorsque le conducteur enfonce la pédale d'accélérateur pour sortir du mode de rampage, par un à-coup imprévu ou, si la consigne de pilotage est filtrée, par un délai d'attente durant lequel l'enfoncement de la pédale d'accélérateur ne se traduit pas immédiatement par une réaction du véhicule.

OBJET DE L'INVENTION

Afin de remédier à l'inconvénient précité de l'état de la technique, la présente invention propose un nouveau procédé de pilotage garantissant au conducteur une parfaite continuité de l'interprétation de sa volonté lorsqu'il appuie sur la pédale d'accélérateur et sort du mode de rampage.

Plus particulièrement, on propose selon l'invention un procédé de pilotage tel que défini dans la revendication 1.

Ainsi, grâce à l'invention, l'interprétation de la volonté du conducteur par les moyens électroniques de pilotage est fidèle en toutes circonstances, ce qui assure au conducteur un confort de conduite appréciable en éliminant notamment tout à-coup ou tout délai d'attente au sortir du mode de rampage.

D'autres caractéristiques avantageuses et non limitatives du procédé de pilotage conforme à l'invention sont définies dans les revendications 2 à 4.

L'invention concerne également un dispositif de pilotage d'une transmission automatisée d'un groupe motopropulseur d'un véhicule automobile à l'état démarré, te que défini dans la revendication 5.

## DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :

- la figure 1 illustre schématiquement un dispositif de pilotage selon l'invention d'une transmission automatisée d'un groupe motopropulseur,
- la figure 2 est un graphique représentant la variation d'un paramètre de freinage en fonction d'un taux d'enfoncement de la pédale de frein,
- la figure 3 est un graphique représentant la variation d'un paramètre d'accélération en fonction d'un taux d'enfoncement de la pédale d'accélérateur, et
- la figure 4 est un graphique représentant les différents domaines de variation de la consigne de pilotage calculée par le dispositif de pilotage de la figure 1.

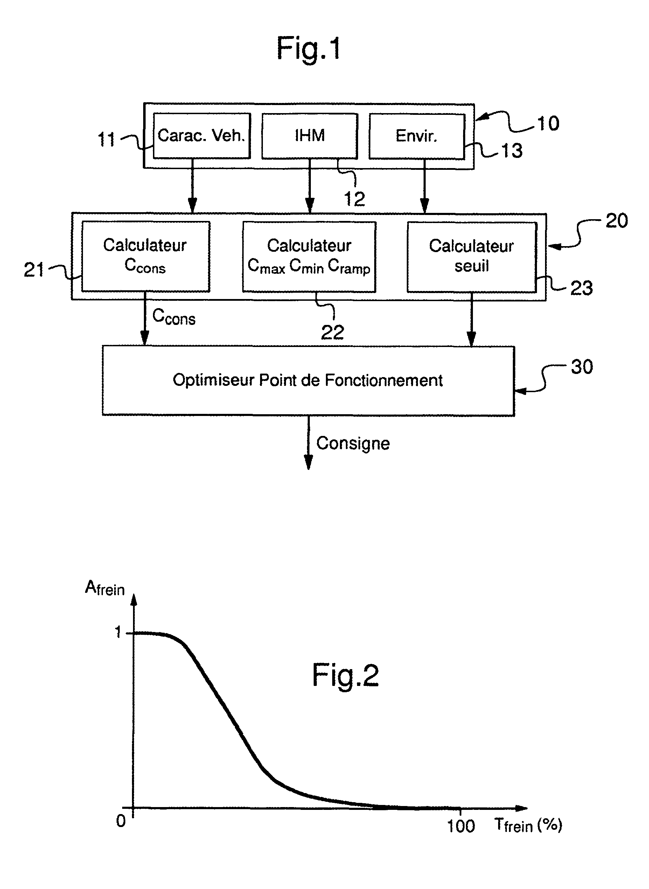

Sur la figure 1, on a représenté schématiquement un exemple de réalisation d'un dispositif de pilotage 1 selon l'invention d'une transmission automatisée d'un groupe motopropulseur d'un véhicule automobile.

Le véhicule automobile comporte classiquement au moins deux roues motrices, deux pédales dont une pédale de frein et une pédale d'accélérateur, un levier de commande permettant au conducteur du véhicule de sélectionner un mode de pilotage du véhicule (mode parking, neutre, marche arrière, marche avant, ...) et une carte électronique dans laquelle est intégré le dispositif de pilotage 1.

Tel qu'illustré sur la figure 1, le dispositif de pilotage 1 comporte un bloc d'acquisition et de mémorisation 10 de données, un calculateur 20 apte à relever les données mémorisées dans le bloc d'acquisition et de mémorisation 10 et à les traiter, et un optimiseur de point de fonctionnement 30 apte à filtrer les données traitées par le calculateur 20.

Le bloc d'acquisition et de mémorisation 10 est adapté à relever et à mémoriser des données relatives au véhicule automobile, à l'environnement du véhicule automobile et à la volonté du conducteur du véhicule automobile.

Le calculateur 20 est quant à lui adapté à déterminer une consigne de pilotage $C_{cons}$ des roues motrices du véhicule automobile en fonction des variables mémorisées dans le bloc d'acquisition et de mémorisation 10. Cette consigne de pilotage $C_{cons}$ est ici une consigne de couple à appliquer aux roues motrices du véhicule automobile. Dans d'autres variantes, cette consigne de pilotage pourra être une consigne d'effort à appliquer aux roues motrices ou de puissance à délivrer à ces roues.

Enfin, l'optimiseur de point de fonctionnement 30 est adapté, lors du démarrage du véhicule automobile, à lisser cette consigne de pilotage $C_{cons}$ de manière que le démarrage ne s'accompagne pas d'un à-coup brusque en avant du véhicule automobile.

Plus précisément, le bloc d'acquisition et de mémorisation 10 comprend trois modules 11, 12, 13.

Un premier module 11 mémorise des données invariables qui sont enregistrées par le constructeur du véhicule automobile et permettent de caractériser le comportement de ce véhicule automobile.

On distingue en particulier parmi ces données un intervalle de variation de vitesses du véhicule automobile. Cet intervalle est caractérisé par la vitesse minimale $V_{min}$ (par exemple égale à 0 km/h) et par la vitesse maximale $V_{max}$ du véhicule automobile (généralement supérieure à 130 km/h).

On distingue aussi parmi ces données un tableau de valeurs, représenté sur la figure 2 sous la forme d'une courbe, associant à chaque valeur de taux d'enfoncement de la pédale de frein $T_{frein}$, exprimé en pourcentage, une valeur de paramètre de freinage $A_{frein}$. Cette courbe est continue, et telle que le paramètre de freinage $A_{frein}$ est égal à 1 lorsque le taux d'enfoncement de la pédale de frein $T_{frein}$ est nul et ce paramètre de freinage $A_{frein}$ est nul lorsque le taux d'enfoncement de la pédale de frein $T_{frein}$ est maximum, c'est-à-dire égal à 100%.

Les autres valeurs du paramètre de freinage $A_{frein}$ en fonction du taux d'enfoncement de la pédale de frein $T_{frein}$, et par conséquent la forme de la courbe représentant ces valeurs, peuvent varier. La forme de cette courbe est prévue pour que le dispositif de pilotage 1 interprète la volonté du conducteur lorsqu'il freine et réponde à cette volonté, de manière par exemple qu'un léger appui sur la pédale de frein ne se traduise pas directement par un freinage important du véhicule mais plutôt par un très léger freinage.

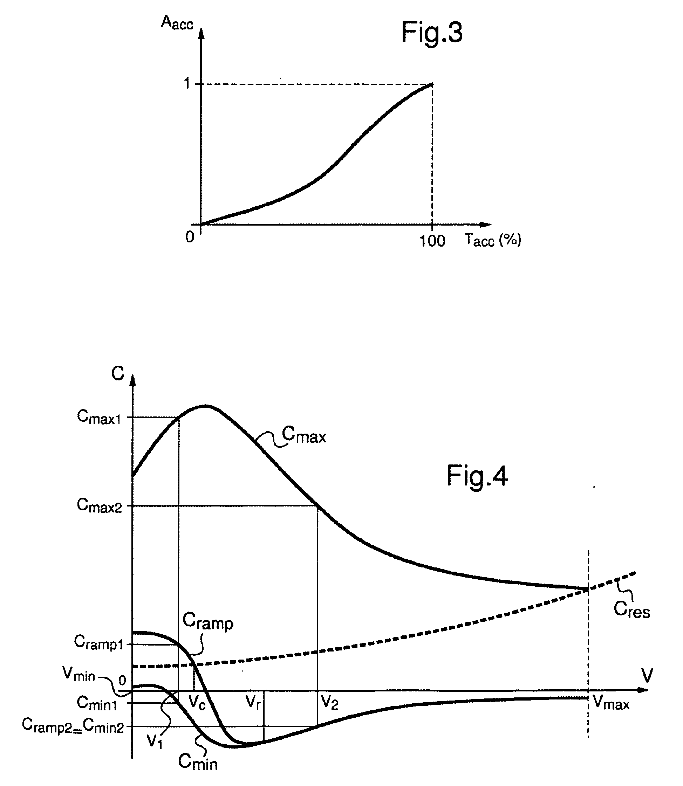

De la même manière, on distingue parmi ces données un tableau de valeurs représenté sur la figure 3 sous la forme d'une courbe, associant à chaque valeur de taux d'enfoncement de la pédale d'accélérateur $T_{acc}$ une valeur de paramètre d'accélération $A_{acc}$. Cette courbe est continue, et telle que le paramètre d'accélération $A_{acc}$ est égal à 1 lorsque le taux d'enfoncement de la pédale d'accélérateur $T_{acc}$ est égal à 100% et ce paramètre de d'accélération $A_{acc}$ est nul lorsque le taux d'enfoncement de la pédale d'accélérateur $T_{acc}$ est nul.

Les autres valeurs du paramètre d'accélération $A_{acc}$ en fonction du taux d'enfoncement de la pédale d'accélérateur $T_{acc}$, et par conséquent la forme de la courbe représentant ces valeurs, peuvent varier. La forme de cette courbe est prévue pour que le dispositif de pilotage 1 interprète la volonté du conducteur lorsqu'il accélère et réponde à cette volonté.

Les données mémorisées par le premier module 11 comprennent par ailleurs deux autres tableaux de valeurs, représentés sur la figure 4 sous la forme de deux courbes continues $C_{max}$ et $C_{min}$, associant à chaque vitesse instantanée $V$ du véhicule automobile, une valeur de couple maximum $C_{max}$ et une valeur de couple minimum $C_{min}$. Ces valeurs correspondent respectivement aux couples maximum et minimum que le groupe motopropulseur est capable de délivrer aux roues motrices pour chaque vitesse instantanée $V$ du véhicule automobile.

Les deux courbes continues $C_{max}$ et $C_{min}$ limitent entre elles un espace dans lequel il est possible de faire varier la valeur de la consigne de pilotage $C_{cons}$ (en couple) suivant les données mémorisées dans le bloc d'acquisition et de mémorisation 10.

Les données mémorisées par le premier module 11 comprennent enfin un tableau de valeurs, représenté sur la figure 4 sous la forme d'une courbe continue $C_{ramp}$, associant à chaque vitesse instantanée $V$ du véhicule automobile, une valeur de couple maximum de rampage $C_{ramp}$. Cette valeur correspond au couple maximum que le groupe motopropulseur est adapté à délivrer aux roues motrices pour chaque vitesse instantanée $V$ du véhicule automobile, lorsque les taux d'enfoncement des pédales de frein et d'accélérateur sont nuls.

Ainsi, les deux courbes continues $C_{ramp}$ et $C_{min}$ limitent entre elles, pour chaque valeur de la vitesse instantanée $V$ du véhicule, un intervalle de couple dans lequel il est possible de faire varier la valeur de la consigne de pilotage $C_{cons}$ (en couple) suivant les données mémorisées dans le bloc d'acquisition et de mémorisation 10, lorsque le conducteur n'appuie pas sur la pédale d'accélérateur, c'est-à-dire tant que le taux d'enfoncement de la pédale d'accélérateur $T_{acc}$ est nul. Dans ce cas, la consigne de pilotage est principalement déduite du taux d'enfoncement de la pédale de frein $T_{frein}$ ; le mode de calcul de la consigne de pilotage est alors appelé « mode de rampage ».

Ce mode de rampage permet au conducteur, lorsque le véhicule se déplace à une vitesse réduite, d'accélérer ou de freiner à l'aide de la seule pédale de frein, ce qui facilite le pilotage du véhicule dans les embouteillages ou pour réaliser un créneau.

Notons que la forme de la courbe représentant le paramètre de freinage $A_{frein}$ en fonction du taux d'enfoncement de la pédale de frein $T_{frein}$ permet de faire en sorte que l'on sorte du mode de rampage au delà d'une valeur seuil du taux d'enfoncement de la pédale de frein $T_{frein}$ en imposant que le paramètre $A_{frein}$ soit nul au-delà de cette valeur seuil.

A titre explicatif, on a représenté en pointillés sur la figure 4 une courbe continue illustrant les variations d'un couple résistant $C_{res}$ appliqué aux roues motrices du véhicule automobile en fonction de la vitesse instantanée $V$ de ce véhicule. Ce couple résistant $C_{res}$, généré par les frottements des roues sur le sol et par ceux de l'air sur le véhicule, correspond au couple à vaincre pour faire avancer le véhicule automobile sur un sol plat. L'intersection des courbes représentatives du couple maximum de rampage $C_{ramp}$ et du couple résistant $C_{res}$ est située à une vitesse instantanée $V$, appelée vitesse de croisière $V_c$, qui correspond à la vitesse du véhicule sur terrain plat lorsque les pédales d'accélérateur et de frein ne sont pas enfoncées, donc en mode de rampage pour le calcul de la consigne de pilotage $C_{cons}$. Cette vitesse de croisière $V_c$ est comprise par exemple entre 6 et 10 km/h en marche avant.

Avantageusement, les valeurs de couple maximum de rampage $C_{ramp}$ et de couple minimum $C_{min}$ sont choisies par le constructeur du véhicule de telle sorte que les courbes représentatives de ces couples se confondent au-delà d'une vitesse instantanée du véhicule, appelée vitesse limite de rampage $V_r$, qui est supérieure à la vitesse de croisière $V_c$ par exemple égale à environ 10 km/h en marche avant.

Les deux courbes continues $C_{ramp}$ et $C_{maw}$ limitent entre elles, pour chaque valeur de la vitesse instantanée $V$ du véhicule, un intervalle de couple dans lequel il est possible de faire varier la valeur de la consigne de pilotage $C_{cons}$ (en couple) suivant les données mémorisées dans le bloc d'acquisition et de mémorisation 10, lorsque le conducteur n'appuie pas sur la pédale de frein, c'est-à-dire tant que le taux d'enfoncement de la pédale de frein $T_{frein}$ est nul.

On comprend ainsi que la courbe $C_{ramp}$ représente la frontière commune des intervalles de couple définis à taux d'enfoncement de la pédale d'accélérateur $T_{acc}$ nul et à taux d'enfoncement de la pédale de frein $T_{frein}$ nul et dans lesquels il est possible de faire varier la valeur de la consigne de pilotage $C_{cons}$ à une vitesse instantanée $V$ du véhicule donnée.

Un second module 12 du bloc d'acquisition et de mémorisation 10 acquiert et mémorise des données variables d'interprétation de la volonté du conducteur (interface homme/machine IHM), à partir de signaux issus de capteurs (non représentés) intégrés au véhicule automobile.

Ce second module 12 acquiert et mémorise en particulier les taux d'enfoncement instantanés de la pédale de frein $T_{frein}$ et de la pédale d'accélérateur $T_{acc}$ (exprimés en pourcentage) ainsi que la position du levier de commande de la transmission du véhicule automobile.

Le levier de commande est ici en position « marche avant ».

Un troisième module 13 du bloc d'acquisition et de mémorisation 10 acquiert et mémorise des données variables relatives à l'environnement du véhicule automobile, à partir de signaux issus de capteurs intégrés au véhicule automobile.

Ce troisième module 13 acquiert et mémorise en particulier la vitesse instantanée V du véhicule automobile, ainsi qu'une donnée relative à l'état de la chaussée et aux conditions météorologiques. Cette donnée peut par exemple être mémorisée sous la forme d'un couple maximum transmissible aux roues motrices du véhicule automobile au-delà duquel les roues risquent de perdre leur adhérence.

Le calculateur 20 est quant à lui adapté à déterminer la consigne de pilotage $C_{cons}$ en fonction des données mémorisées dans les trois modules 11, 12, 13 du bloc d'acquisition et de mémorisation 10.

Pour cela, il comporte un premier module 22 d'acquisition de données mémorisées dans le bloc d'acquisition et de mémorisation 10, un second module 21 de calcul de la consigne de pilotage $C_{cons}$ et un troisième module 23 de filtrage.

Le premier module 22 est en particulier conçu pour relever la vitesse instantanée V du véhicule automobile, ainsi que les taux d'enfoncement des pédales de frein $T_{frein}$ et d'accélérateur $T_{acc}$. Il est également conçu pour relever la valeur du couple minimum $C_{min}$, du couple maximum $C_{max}$ et du couple maximum de rampage $C_{ramp}$ correspondant à la vitesse instantanée V relevée.

Le second module calcule la consigne de pilotage $C_{cons}$ en fonction de ces six valeurs.

Selon une caractéristique particulièrement avantageuse de l'invention, cette détermination est réalisée de manière que la consigne de pilotage $C_{cons}$ varie de manière continue dans tout ledit intervalle de variation de vitesses, en particulier lorsque la vitesse instantanée V du véhicule automobile est non nulle et inférieure à la vitesse limite de rampage $V_r$ et que le taux d'enfoncement de la pédale d'accélérateur $T_{acc}$ passe d'une valeur nulle à une valeur non nulle.

Plus précisément, le second module 21 du calculateur 20 mémorise une unique formule mathématique au moyen de laquelle il calcule la valeur de la consigne de pilotage $C_{cons}$, cette formule étant la même en mode de rampage ou en mode normal.

Cette formule mathématique est une fonction continue des trois variables que sont les taux d'enfoncement des pédales de frein $T_{frein}$ et d'accélérateur $T_{acc}$ et la vitesse instantanée V du véhicule automobile. On entend par « fonction continue » le fait qu'une variation continue de l'une et/ou de l'autre de ces trois variables se traduit par une variation continue de la consigne de pilotage $C_{cons}$.

Cette formule mathématique peut s'exprimer sous la forme suivante :

$$C_{cons} = C1(V) + A_{acc} \cdot ( C_{max}(V) - C1(V)),$$

avec

$$C1(V) = C_{min}(V) + A_{frein} \cdot (C_{ramp}(V) - C_{min}(V)).$$

Il est bien sûr possible d'adapter cette formule mathématique, pourvu que, lorsque la vitesse instantanée V du véhicule automobile est non nulle et inférieure à la vitesse limite de rampage $V_r$, le passage d'une valeur nulle à une valeur non nulle du taux d'enfoncement de la pédale d'accélérateur $T_{acc}$ engendre une variation continue de la consigne de pilotage $C_{cons}$.

Enfin, le troisième module 23 de filtrage permet de déterminer deux valeurs seuil.

Il permet de relever dans le troisième module 13 du bloc d'acquisition et de mémorisation 10 le couple maximum transmissible aux roues motrices du véhicule automobile au-delà duquel les roues risquent de perdre leur adhérence et d'en déduire un seuil S1 de consigne de pilotage.

Il permet également de calculer ou d'acquérir un seuil S2 de variation de consigne de pilotage. Préférentiellement, ce seuil S2 de variation de consigne est formé par une valeur enregistrée par le constructeur du véhicule automobile dans le bloc d'acquisition et de mémorisation 10.

Enfin, l'optimiseur de point de fonctionnement 30 est adapté à acquérir la consigne de pilotage $C_{cons}$ et à comparer cette consigne et ses variations avec les deux seuils S1, S2 précités.

Plus précisément, lors du démarrage du véhicule automobile, l'optimiseur de point de fonctionnement 30 est adapté à acquérir le seuil S2 de variation de consigne de pilotage, à calculer la variation instantanée de consigne de pilotage $C_{cons}$ et à comparer cette variation instantanée avec ce seuil S2.

Puis, si cette variation instantanée est inférieure au seuil S2, la consigne de pilotage n'est pas corrigée et est transmise aux moyens d'actionnement de la transmission automatisée du groupe motopropulseur du véhicule automobile.

En revanche, si cette variation instantanée est supérieure au seuil S2, l'optimiseur de point de fonctionnement 30 est adapté à corriger la consigne de pilotage $C_{cons}$, de telle sorte que la variation instantanée de consigne de pilotage $C_{cons}$ soit égale au seuil S2. De ce fait, l'optimiseur de point de fonctionnement 30 permet de lisser la consigne de pilotage $C_{cons}$ de telle sorte que le démarrage du véhicule automobile ne s'accompagne pas d'un à-coup brusque mais plutôt que le véhicule accélère doucement jusqu'à atteindre la vitesse de croisière $V_c$.

Après le démarrage du véhicule, l'optimiseur de point de fonctionnement 30 est adapté à acquérir le seuil S1 de consigne de pilotage et à comparer la consigne de pilotage $C_{cons}$ avec ce seuil S1.

Puis, si cette consigne est inférieure au seuil S1, la consigne de pilotage $C_{cons}$ n'est pas corrigée et est transmise aux moyens d'actionnement de la transmission automatisée du groupe motopropulseur du véhicule automobile.

En revanche, si cette consigne est supérieure au seuil S1, l'optimiseur de point de fonctionnement 30 est adapté à corriger la consigne de pilotage $C_{cons}$, de telle sorte qu'elle soit égale au seuil S1. De ce fait, l'optimiseur de point de fonctionnement 30 permet d'éviter que les roues motrices du véhicule ne glissent sur la chaussée.

En résumé, une fois le groupe motopropulseur démarré, le procédé de détermination de la consigne de pilotage comporte trois étapes principales successives.

Il comporte une première étape d'acquisition de la vitesse instantanée V, des taux d'enfoncement des pédales de frein $T_{frein}$ et d'accélérateur $T_{acc}$, du couple minimum $C_{min}$, du couple maximum $C_{max}$ et du couple maximum de rampage $C_{ramp}$ qui correspondent à la vitesse instantanée V acquise.

Il comporte ensuite une seconde étape de calcul de la consigne de pilotage $C_{cons}$ au moyen de la formule mathématique précitée, et du seuil S1 de consigne de pilotage.

Il comporte enfin une troisième étape de filtrage de la consigne de pilotage $C_{cons}$ en comparant sa valeur au seuil S1 précité.

Le procédé de détermination de la consigne de pilotage $C_{cons}$ peut être illustré par trois exemples représentatifs.

Dans un premier exemple, supposons que le véhicule avance à une vitesse instantanée $V_1$ (figure 4) non nulle, inférieure à la vitesse limite de rampage $V_r$.

Au cours de la première étape, le bloc d'acquisition et de mémorisation 10 relève la vitesse instantanée $V_1$, les taux d'enfoncement des pédales de frein $T_{frein}$ et d'accélérateur $T_{acc}$, ainsi que les couples minimum $C_{min1}$, maximum $C_{max1}$ et maximum de rampage $C_{ramp1}$ qui correspondent à la vitesse instantanée $V_1$ relevée.

Au cours de la seconde étape, le calculateur 20 détermine la consigne de pilotage $C_{cons}$ au moyen de la formule précitée.

Considérons tout d'abord le cas où le conducteur appuie sur la pédale d'accélérateur. Le taux d'enfoncement de la pédale d'accélérateur $T_{acc}$ est alors non nul et le paramètre d'accélération $A_{acc}$ est non nul. Le taux d'enfoncement de la pédale de frein $T_{frein}$ est nul et le paramètre de freinage $A_{frein}$ est alors égal à 1. De ce fait, la formule mathématique s'exprime sous la forme :

$$C_{cons} = C_{ramp1} + A_{acc} \cdot ( C_{max1} - C_{ramp1} ).$$

Par conséquent, en référence à la figure 4, la valeur de la consigne de pilotage $C_{cons}$ est dans ce cas comprise entre les valeurs des couples maximum de rampage $C_{ramp1}$ et maximum $C_{max1}$ lorsque le conducteur appuie sur la pédale d'accélérateur. Elle est égale à la valeur du couple maximum de rampage $C_{ramp1}$ si le taux d'enfoncement de la pédale d'accélérateur $T_{acc}$ est de 0% et égale à la valeur du couple maximum $C_{max1}$ si le taux d'enfoncement de la pédale d'accélérateur $T_{acc}$ est de 100%.

Considérons maintenant le cas où le conducteur appuie sur la pédale de frein (mode de rampage). Le paramètre de freinage $A_{frein}$ est alors non nul tandis que le paramètre d'accélération $A_{acc}$ est égal à zéro, car le taux d'enfoncement de la pédale d'accélérateur $T_{acc}$ est alors nul. De ce fait, la formule mathématique s'exprime sous la forme :

$$C_{cons} = C_{min1} + A_{frein} \cdot (C_{ramp1} - C_{min1}).$$

Par conséquent, en référence à la figure 4, la valeur de la consigne de pilotage $C_{cons}$ est dans ce cas comprise entre les valeurs des couples minimum $C_{min1}$ et maximum de rampage $C_{ramp1}$ lorsque le conducteur appuie sur la pédale de frein. Elle est égale à la valeur du couple minimum $C_{min1}$ si le taux d'enfoncement de la pédale de frein $T_{frein}$ est de 100% et égale à la valeur du couple maximum de rampage $C_{ramp1}$ si le taux d'enfoncement de la pédale de frein $T_{frein}$

est de 0%.

Enfin, au cours de la troisième étape, l'optimiseur de point de fonctionnement 30 compare la valeur de la consigne de pilotage $C_{cons}$ avec la valeur seuil S1 afin, éventuellement, de corriger cette consigne.

Dans un second exemple, supposons que le véhicule avance à une vitesse instantanée $V_2$ (figure 4) non nulle, supérieure à la vitesse limite de rampage $V_r$.

Au cours de la première étape, le bloc d'acquisition et de mémorisation 10 relève la vitesse instantanée $V_2$, les taux d'enfoncement des pédales de frein $T_{frein}$ et d'accélérateur $T_{acc}$, ainsi que les couples minimum $C_{min2}$ et maximum $C_{max2}$. On notera qu'à cette vitesse le couple minimum $C_{min2}$ et le couple maximum de rampage $C_{ramp2}$ sont égaux car les courbes représentatives de ces couples en fonction de la vitesse instantanée du véhicule sont confondues pour les vitesses supérieures à la vitesse limite de rampage $V_r$, comme représenté sur la figure 4.

Au cours de la seconde étape, le calculateur 20 détermine la consigne de pilotage $C_{cons}$ au moyen de la formule mathématique précitée.

Considérons tout d'abord le cas où le conducteur appuie sur la pédale d'accélérateur. Comme dans le premier exemple, le paramètre d'accélération $A_{acc}$ est alors non nul tandis que le paramètre de freinage $A_{frein}$ est égal à 1 et la formule mathématique s'exprime sous une forme similaire à celle obtenue dans le premier exemple :

$$C_{cons} = C_{ramp2} + A_{acc} \cdot ( C_{max2} - C_{ramp2}) = C_{min2} + A_{acc} \cdot ( C_{max2} - C_{min2}).$$

La valeur de consigne est alors égale à la valeur du couple maximum de rampage $C_{ramp2}$ (qui est ici égale à la valeur du couple minimum $C_{min2}$) si le taux d'enfoncement de la pédale d'accélérateur est de 0% et égale à la valeur du couple maximum $C_{max2}$ si le taux d'enfoncement de la pédale d'accélérateur est de 100%.

Considérons maintenant le cas où le conducteur appuie sur la pédale de frein. Le paramètre de freinage $A_{frein}$ est non nul tandis que le paramètre d'accélération $A_{acc}$ est égal à zéro. De ce fait, la formule mathématique donne le résultat suivant :

$$C_{cons} = C_{min2} = C_{ramp2}.$$

Par conséquent, dans cette situation, le couple transmis par le motopropulseur sera très légèrement négatif et correspondra au couple de « frein-moteur ». De ce fait, le freinage du véhicule sera assuré par ce couple de frein-moteur et par les freins du véhicule automobile.

Dans un troisième exemple, supposons que le véhicule avance à la vitesse instantanée $V_1$, et que le conducteur lâche la pédale de frein pour appuyer sur la pédale d'accélérateur afin de sortir du mode de rampage.

Au cours de la première étape, le bloc d'acquisition et de mémorisation 10 relève la vitesse instantanée $V_1$, les taux d'enfoncement des pédales de frein $T_{frein}$ et d'accélérateur $T_{acc}$, ainsi que les couples minimum $C_{min1}$, maximum $C_{max1}$ et maximum de rampage $C_{ramp1}$ correspondants à la vitesse instantanée $V_1$ relevée.

Au cours de la seconde étape, le calculateur 20 détermine la consigne de pilotage $C_{cons}$ au moyen de la formule précitée.

Considérons le moment où le conducteur n'a pas encore totalement lâché la pédale de frein. La consigne de pilotage $C_{cons}$ est alors de la forme :

$$C_{cons} = C_{min}(V) + A_{frein} \cdot (C_{ramp}(V) - C_{min}(V)).$$

Si l'on considère le moment où le conducteur lâche la pédale de frein et n'appuie pas encore sur la pédale d'accélérateur, le paramètre $A_{frein}$ est alors égal à 1 dans la formule précédente, et la consigne de pilotage $C_{cons}$ devient :

$$C_{cons} = C_{ramp}(V).$$

Considérons maintenant le moment où le conducteur a commencé à appuyer sur la pédale d'accélérateur. La consigne de pilotage $C_{cons}$ est alors calculée par la formule :

$$C_{cons} = C_{ramp}(V) + A_{acc} \cdot ( C_{max}(V) - C_{ramp}(V)).$$

Si l'on considère le moment où le conducteur a lâché la pédale de frein et n'a pas encore appuyé sur la pédale d'accélérateur, le paramètre $A_{acc}$ est alors égal à zéro dans la formule précédente, et la consigne de pilotage $C_{cons}$ s'écrit:

$$C_{cons} = C_{ramp}(V).$$

On observe en conséquence que la sortie du mode rampage, pendant laquelle le taux d'enfoncement de la pédale d'accélérateur $T_{acc}$ passe d'une valeur nulle à une valeur non nulle, se traduit par une variation continue de la consigne de pilotage $C_{cons}$.

La présente invention n'est nullement limitée aux modes de réalisation décrits et représentés, mais l'homme du métier saura y apporter toute variante conforme à son esprit.

On a considéré ici dans l'ensemble de la description le cas d'un véhicule en marche avant. Le procédé selon l'invention s'applique également de façon similaire au pilotage de la transmission d'un véhicule automobile en marche arrière. La vitesse de croisière est alors par exemple comprise entre 4 et 8 km/h. Les valeurs des couples maximum et minimum en fonction de la vitesse sont également modifiées en marche arrière.

Le sens de la marche, indiqué par la position du levier de commande de la boîte de vitesses est une variable intervenant dans le calcul de la consigne de pilotage.

Ce procédé peut être adapté à tout type de véhicule, de type essence, électrique ou hybride.

**Revendications**

1. Procédé de pilotage d'une transmission automatisée d'un groupe motopropulseur d'un véhicule automobile à l'état démarré, comprenant les étapes suivantes :

   a) on mesure plusieurs variables dont un taux d'enfoncement de la pédale de frein ($T_{frein}$), un taux d'enfoncement de la pédale d'accélérateur ($T_{acc}$) et une vitesse instantanée (V) du véhicule automobile, cette vitesse instantanée (V) étant comprise dans un intervalle de variation de vitesses s'étendant depuis la vitesse minimate ($V_{min}$) jusqu'à la vitesse maximale ($V_{max}$) du véhicule automobile,
   b) on détermine une consigne de pilotage ($C_{cons}$) d'au moins deux des roues motrices du véhicule automobile en fonction des variables ($T_{frein}$, $T_{acc}$, V) mesurées à l'étape a),

   **caractérisé en ce que**, le groupe motopropulseur étant adapté à délivrer, pour chaque vitesse instantanée (V) du véhicule automobile, un couple maximum ($C_{max}$) instantané, un couple minimum ($C_{min}$) instantané, et un couple maximum de rampage ($C_{ramp}$ instantané lorsque le taux d'enfoncement de la pédale d'accélérateur $T_{acc}$) est nul, -la détermination à l'étape b) est réalisée en fonction dudit couple maximum ($C_{max}$), dudit couple minimum ($C_{min}$) et dudit couple maximum de rampage ($C_{ramp}$), de manière que la consigne de pilotage ($C_{cons}$) varie de manière continue dans tout ledit intervalle de variation de vitesses, en particulier lorsque la vitesse instantanée (V) du véhicule automobile est non nulle et inférieure à une valeur seuil de rampage ($V_r$) et que le taux d'enfoncement de la pédale d'accélérateur ($T_{acc}$) passe d'une valeur nulle à une valeur non nulle.

2. Procédé de pilotage selon la revendication précédente, dans lequel la consigne de pilotage ($C_{cons}$) est une valeur de couple ou d'effort à appliquer auxdites roues du véhicule automobile ou de puissance à délivrer auxdites roues du véhicule automobile.

3. Procédé de pilotage selon les revendications 1 et 2, dans lequel ladite consigne est déterminée selon la formule :

$$C_{cons} = C1(V) + A_{acc} \cdot ( C_{max}(V) - C1(V)),$$

avec

$$C1(V) = C_{min}(V) + A_{frein} \cdot (C_{ramp}(V) - C_{min}(V)),$$

   - $C_{cons}$ étant la valeur du couple à appliquer aux roues du véhicule automobile,
   - $A_{acc}$ étant une fonction continue du taux d'enfoncement de la pédale d'accélérateur,

- $A_{frein}$ étant une fonction continue du taux d'enfoncement de la pédale de frein,
- $C_{max}(V)$ étant le couple maximum applicable aux roues du véhicule automobile, à la vitesse instantanée (V),
- $C_{min}(V)$ étant le couple minimum applicable aux roues du véhicule automobile, à la vitesse instantanée (V),
- $C_{ramp}(V)$ étant le couple maximum de rampage, à la vitesse instantanée.

**4.** Procédé de pilotage selon l'une des revendications précédentes, dans lequel à l'étape a), on mesure des variables relatives à l'environnement du véhicule automobile et à l'étape b), on détermine ladite consigne de pilotage en fonction desdites variables relatives à l'environnement du véhicule automobile.

**5.** Dispositif de pilotage d'une transmission automatisée d'un groupe motopropulseur d'un véhicule automobile à l'état démarré, ce groupe motopropulseur étant adapté à délivrer, pour chaque vitesse instantanée (V) du véhicule automobile, un couple maximum ($C_{max}$) instantané, un couple minimum ($C_{min}$) instantané, et un couple maximum de rampage ($C_{ramp}$) instantané lorsque le taux d'enfoncement de la pédale d'accélérateur ($T_{acc}$) est nul, le dispositif de pilotage comportant :

- un bloc d'acquisition et de mémorisation (10) de variables dont un taux d'enfoncement de la pédale de frein ($T_{frein}$), un taux d'enfoncement de la pédale d'accélérateur ($T_{acc}$) et une vitesse instantanée (V) du véhicule automobile, cette vitesse instantanée (V) étant comprise dans un intervalle de variation de vitesses s'étendant depuis la vitesse minimale ($V_{min}$) jusqu'à la vitesse maximale ($V_{max}$) du véhicule automobile,
- un calculateur (20) apte à lire les variables mémorisées dans le bloc d'acquisition et de mémorisation (10) et à déterminer une consigne de pilotage ($C_{cons}$) d'au moins deux roues motrices du véhicule automobile,

**caractérisé en ce que** le calculateur (20) détermine la consigne de pilotage ($C_{cons}$) en fonction dudit couple maximum ($C_{max}$), dudit couple minimum ($C_{min}$) et dudit couple maximum de rampage ($C_{ramp}$) de telle sorte que la consigne de pilotage ($C_{cons}$) varie de manière continue dans tout l'intervalle de variation de vitesses, en particulier lorsque la vitesse instantanée (V) du véhicule automobile est non nulle et inférieure à une valeur seuil de rampage ($V_r$) et que le taux d'enfoncement de la pédale d'accélérateur ($T_{acc}$) passe d'une valeur nulle à une valeur non nulle.

## Patentansprüche

**1.** Verfahren zur Steuerung eines Automatikgetriebes eines Antriebseinheit eines Kraftfahrzeugs im gestarteten Zustand, das die folgenden Schritte enthält:

a) es werden mehrere Variablen gemessen, darunter ein Eindrückgrad des Bremspedals ($T_{frein}$), ein Eindrückgrad des Gaspedals ($T_{acc}$) und eine Augenblicksgeschwindigkeit (V) des Kraftfahrzeugs, wobei diese Augenblicksgeschwindigkeit (V) in einem Änderungsintervall von Geschwindigkeiten enthalten ist, das von der Mindestgeschwindigkeit ($V_{min}$) bis zur Höchstgeschwindigkeit ($V_{max}$) des Kraftfahrzeugs reicht,
b) es wird ein Steuersollwert ($C_{cons}$) von mindestens zwei der Antriebsräder des Kraftfahrzeugs abhängig von den im Schritt a) gemessenen Variablen ($T_{frein}$, $T_{acc}$, V) bestimmt,

**dadurch gekennzeichnet, dass**, da die Antriebseinheit geeignet ist, um für jede Augenblicksgeschwindigkeit (V) des Kraftfahrzeugs ein maximales augenblickliches Drehmoment ($C_{max}$), ein minimales augenblickliches Drehmoment ($C_{min}$) und ein maximales augenblickliches Kriechdrehmoment ($C_{ramp}$) zu liefern, wenn der Eindrückgrad des Gaspedals ($T_{acc}$) Null ist, die Bestimmung im Schritt b) abhängig vom maximalen Drehmoment ($C_{max}$), vom minimalen Drehmoment ($C_{min}$) und vom maximalen Kriechdrehmoment ($C_{ramp}$) durchgeführt wird, so dass der Steuersollwert ($C_{cons}$) im ganzen Änderungsintervall von Geschwindigkeiten kontinuierlich variiert, insbesondere dann, wenn die Augenblicksgeschwindigkeit (V) des Kraftfahrzeugs ungleich Null und niedriger als ein Kriechschwellwert ($V_r$) ist, und der Eindrückgrad des Gaspedals ($T_{acc}$) von einem Wert Null zu einem Wert ungleich Null übergeht.

**2.** Steuerverfahren nach dem vorhergehenden Anspruch, wobei der Steuersollwert ($C_{cons}$) ein Wert eines Drehmoments oder einer an die Räder des Kraftfahrzeugs anzuwendenden Kraft oder einer an die Räder des Kraftfahrzeugs zu liefernden Leistung ist.

**3.** Steuerverfahren nach den Ansprüchen 1 und 2, wobei der Sollwert gemäß der folgenden Formel bestimmt wird:

$$C_{cons} = C1(V) + A_{acc} \cdot (C_{max}(V) - C1(V)),$$

mit

$$C1(V) = C_{min}(V) + A_{frein} \cdot (C_{ramp}(V) - C_{min}(V)),$$

- wobei $C_{cons}$ der Wert des an die Räder des Kraftfahrzeugs anzuwendenden Drehmoments ist,
- wobei $A_{acc}$ eine kontinuierliche Funktion des Eindrückgrads des Gaspedals ist,
- wobei $A_{frein}$ eine kontinuierliche Funktion des Eindrückgrads des Bremspedals ist,
- wobei $C_{max}(V)$ das an die Räder des Kraftfahrzeugs bei der Augenblicksgeschwindigkeit (V) anwendbare maximale Drehmoment ist,
- wobei $C_{min}(V)$ das an die Räder des Kraftfahrzeugs bei der Augenblicksgeschwindigkeit (V) anwendbare minimale Drehmoment ist,
- wobei $C_{ramp}(V)$ das Kriechdrehmoment bei der Augenblicksgeschwindigkeit ist.

4. Steuerverfahren nach einem der vorhergehenden Ansprüche, bei dem im Schritt a) Variable bezüglich der Umgebung des Kraftfahrzeugs gemessen werden, und im Schritt b) der Steuersollwert abhängig von den Variablen bezüglich der Umgebung des Kraftfahrzeugs bestimmt wird.

5. Verfahren zur Steuerung eines Automatikgetriebes einer Antriebseinheit eines Kraftfahrzeugs im gestarteten Zustand, wobei diese Antriebseinheit geeignet ist, um für jede Augenblicksgeschwindigkeit (V) des Kraftfahrzeugs ein maximales augenblickliches Drehmoment ($C_{max}$), ein minimales augenblickliches Drehmoment ($C_{min}$) und ein maximales augenblickliches Kriechdrehmoment ($C_{ramp}$) zu liefern, wenn der Eindrückgrad des Gaspedals ($T_{acc}$) Null ist, wobei die Steuervorrichtung aufweist:

- einen Erfassungs- und Speicherblock (10) von Variablen, darunter ein Eindrückgrad des Bremspedals ($T_{frein}$), ein Eindrückgrad des Gaspedals ($T_{acc}$) und eine Augenblicksgeschwindigkeit (V) des Kraftfahrzeugs, wobei diese Augenblicksgeschwindigkeit (V) in einem Geschwindigkeitsänderungsintervall enthalten ist, das von der Mindestgeschwindigkeit ($V_{min}$) bis zur Höchstgeschwindigkeit ($V_{max}$) des Kraftfahrzeugs reicht,
- einen Rechner (20), der die im Erfassungs- und Speicherblock (10) gespeicherten Variablen lesen und einen Steuersollwert ($C_{cons}$) von mindestens zwei Antriebsrädern des Kraftfahrzeugs bestimmen kann,

**dadurch gekennzeichnet, dass** der Rechner (20) den Steuersollwert ($C_{cons}$) abhängig vom maximalen Drehmoment ($C_{max}$), vom minimalen Drehmoment ($C_{min}$) und vom maximalen Kriechdrehmoment ($C_{ramp}$) bestimmt, so dass der Steuersollwert ($C_{cons}$) kontinuierlich in jedem Geschwindigkeitsänderungsintervall variiert, insbesondere dann, wenn die Augenblicksgeschwindigkeit (V) des Kraftfahrzeugs ungleich Null und geringer als ein Kriechschwellwert ($V_r$) ist, und wenn der Eindrückgrad des Gaspedals ($T_{acc}$) von einem Wert Null auf einen Wert ungleich Null übergeht.

**Claims**

1. Method for controlling an automatic transmission of a power train of a motor vehicle in the started-up state, comprising the following steps:

a) a number of variables are measured, including a rate of depression of the brake pedal ($T_{brake}$), a rate of depression of the accelerator pedal ($T_{acc}$) and an instantaneous speed (V) of the motor vehicle, this instantaneous speed (V) being within a speed variation interval extending from the minimum speed ($V_{min}$) to the maximum speed ($V_{max}$) of the motor vehicle,
b) a control setpoint ($C_{cons}$) is determined for at least two of the drive wheels of the motor vehicle as a function of the variables ($T_{brake}$, $T_{acc}$, V) measured in the step a),

**characterized in that**, the power train being designed to deliver, for each instantaneous speed (V) of the motor vehicle, a maximum instantaneous torque ($C_{max}$), a minimum instantaneous torque ($C_{min}$), and a maximum instantaneous crawling torque ($C_{crawl}$) when the rate of depression of the accelerator pedal ($T_{acc}$) is zero, the determination in the step b) is performed as a function of said maximum torque ($C_{max}$), of said minimum torque ($C_{min}$) and of said

maximum crawling torque ($C_{crawl}$, such that the control setpoint ($C_{cons}$) varies continuously throughout said speed variation interval, in particular when the instantaneous speed (V) of the motor vehicle is non-zero and below a crawling threshold value ($V_r$) and the rate of depression of the accelerator pedal ($T_{acc}$) changes from a zero value to a non-zero value.

2. Control method according to the preceding claim, in which the control setpoint ($C_{cons}$) is a value of torque or of force to be applied to said wheels of the motor vehicle or of power to be delivered to said wheels of the motor vehicle.

3. Control method according to Claims 1 and 2, in which said setpoint is determined according to the formula:

$$\texttt{C}_{\texttt{cons}} \;=\; \texttt{C1(V)} \;+\; \texttt{A}_{\texttt{acc}} \;\cdot\; (\texttt{C}_{\texttt{max}}\texttt{(V)} \;-\; \texttt{C1(V)}),$$

with

$$\texttt{C1(V)} \;=\; \texttt{C}_{\texttt{min}}\texttt{(V)} \;+\; \texttt{A}_{\texttt{brake}} \;\cdot\; (\texttt{C}_{\texttt{crawl}}\texttt{(V)} \;-\; \texttt{C}_{\texttt{min}}\texttt{(V)}),$$

- $C_{cons}$ being the value of the torque to be applied to the wheels of the motor vehicle,
- $A_{acc}$ being a continuous function of the rate of depression of the accelerator pedal,
- $A_{brake}$ being a continuous function of the rate of depression of the brake pedal,
- $C_{max}(V)$ being the maximum torque that can be applied to the wheels of the motor vehicle, at the instantaneous speed (V),
- $C_{min}(V)$ being the minimum torque that can be applied to the wheels of the motor vehicle, at the instantaneous speed (V),
- $C_{crawl}(V)$ being the maximum crawling torque, at the instantaneous speed (V).

4. Control method according to one of the preceding claims, in which, in the step a), variables relating to the environment of the motor vehicle are measured and, in the step b), said control setpoint is determined as a function of said variables relating to the environment of the motor vehicle.

5. Device for controlling an automatic transmission of a power train of a motor vehicle in the started-up state, this power train being designed to deliver, for each instantaneous speed (V) of the motor vehicle, a maximum instantaneous torque ($C_{max}$), a minimum instantaneous torque ($C_{min}$), a maximum instantaneous crawling torque ($C_{crawl}$ when the rate of depression of the accelerator pedal ($T_{acc}$) is zero, the control device comprising:

- a block for acquiring and storing (10) variables, including a rate of depression of the brake pedal ($T_{brake}$), a rate of depression of the accelerator pedal ($T_{acc}$) and an instantaneous speed (V) of the motor vehicle, this instantaneous speed (V) being within a speed variation interval extending from the minimum speed ($V_{min}$) to the maximum speed ($V_{max}$) of the motor vehicle,
- a computer (20) suitable for reading the variables stored in the acquisition and storage block (10) and for determining a control setpoint ($C_{cons}$) for at least two drive wheels of the motor vehicle, **characterized in that** the computer (20) determines the control setpoint ($C_{cons}$) as a function of said maximum torque ($C_{max}$), of said minimum torque ($C_{min}$) and of said maximum crawling torque ($C_{crawl}$) such that the control setpoint ($C_{cons}$) varies continuously throughout the speed variation interval, in particular when the instantaneous speed (V) of the motor vehicle is non-zero and below a crawling threshold value ($V_r$) and the rate of depression of the accelerator pedal ($T_{acc}$) changes from a zero value to a non-zero value.

# Fig.1

| Carac. Veh. | IHM | Envir. |
|---|---|---|

11 — 10 — 13 — 12

| Calculateur $C_{cons}$ | Calculateur $C_{max}$ $C_{min}$ $C_{ramp}$ | Calculateur seuil |
|---|---|---|

21 — 20 — 23

$C_{cons}$

22

Optimiseur Point de Fonctionnement

30

Consigne

$A_{frein}$

1

0

Fig.2

100    $T_{frein}$ (%)

# Fig.3

# Fig.4

**EP 2 231 457 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007030045 A
- US 2006089234 A
- FR 2851629
- FR 2875284